# EUROPEAN PATENT SPECIFICATION

(11) **EP 2 784 423 B1**
(45) Date of publication and mention of the grant of the patent: **23.03.2016**
(21) Application number: 13160852.3
(22) Date of filing: 25.03.2013
(51) Int. Cl.: F28C 3/08, B01D 53/00, B01D 53/14, B01D 53/78, F28F 19/00, B01D 3/00

(54) **Gas/liquid contacting device comprising emergency cooling tank**
Gas-/Flüssigkeitskontaktvorrichtung mit Notkühlungstank
Dispositif de contact gaz/liquide comprenant un réservoir de refroidissement d'urgence

(43) Date of publication of application: 01.10.2014
(73) Proprietor: ALSTOM Technology Ltd, 5400 Baden (CH)
(72) Inventor: Svensson, Göran, 352 63 Växjö (SE)
(74) Representative: General Electric Technology GmbH

(56) References cited:
- WO-A1-98/16302
- AT-A4- 505 751
- DD-A3- 157 409
- DE-A1- 4 125 214

## Description

### Field of the Invention

The present invention relates to a gas/liquid contacting device according to the preamble of claim 1.

The present invention further relates to a method of manufacturing a gas/liquid contacting device.

The present invention also relates to a method of emergency cooling a gas/liquid contacting device.

### Background of the invention

In the combustion of a fuel, such as coal, oil, peat, waste, natural gas, etc. a hot process gas in the form of a flue gas is generated. The flue gas must normally be treated prior to being released to the atmosphere. The treatment may involve, for example, removal of particulate matter and gaseous pollutants, such as HCl and SO₂. Removal of gaseous pollutants, such as HCl and SO₂, may be performed in a gas/liquid contacting device in which the flue gas is brought into contact with an absorption liquid, for example a liquid comprising water. Additionally or alternatively, the treatment of the flue gas may involve condensation of water vapor from the flue gas. Such may be performed in a gas/liquid contacting device in which the flue gas is brought into contact with a cooling liquid, for example a liquid comprising water, for cooling the flue gas to a temperature which causes condensation of at least a portion of its content of water vapor.

Inside of the gas/liquid contacting device there is a mixture of liquid, typically comprising water, and often also salts and/or acids, and a hot process gas. This generates a relatively corrosive environment inside the gas/liquid contacting device. To reduce the risk of corrosion at least some parts of the interior structures of the gas/liquid contacting device may be made from, for example, various polymer materials, such as polypropylene, teflon, fiber reinforced plastics, rubber, various polymer coatings, etc. Since the flue gas is normally relatively hot upon entering the gas/liquid contacting device, there is need to ensure supply of liquid at all times, to avoid overheating of the interior structures.

DE 41 25 214 A1 discloses a wet scrubber arranged for cleaning a flue gas by bringing the flue gas into contact with a liquid. An emergency cooling system is arranged to ensure that the flue gas is cooled also in situations when the normal supply of liquid is disturbed. The emergency cooling system comprises a valve that is opened in emergency situations to supply liquid to a tank. The tank supplies liquid to a gas cooling section of the wet scrubber to ensure appropriate cooling of the flue gas.

### Summary of the Invention

An object of the present invention is to provide an emergency cooling system which is more efficient than those of the prior art.

This object is achieved by a gas/liquid contacting device according to the features of claim 1.

An advantage of this gas/liquid contacting device is that the ground space required, i.e., the footprint area, is reduced compared to the prior art. This reduces the investment cost, since the gas/liquid contacting device becomes more compact. Furthermore, the total length of the piping of the emergency cooling system is reduced, since the emergency water needs only be transported a relatively short distance.

According to one embodiment the emergency water tank is supported by the gas/liquid contacting tower. An advantage of this embodiment is that the cost for building stand structures for the emergency water tank is reduced, since the gas/liquid contacting tower functions as the support for the emergency water tank.

According to one embodiment the emergency water tank is at least partly integrated with the gas/liquid contacting tower. An advantage of this embodiment is that the manufacturing cost is reduced, and so is the space required for the gas/liquid contacting device.

According to one embodiment, the gas/liquid contacting tower is adapted for bringing a process gas in the form of flue gas generated in the combustion of a fuel into contact with at least one liquid comprising at least 75% by weight of water. According to one embodiment the temperature of the process gas is, at least in one position inside the gas/liquid contacting tower, in the range of 30-80°C. According to one embodiment the gas/liquid contacting tower is adapted for treating a process gas in the form of flue gas generated in the combustion of a solid waste material, for example household waste material and/or industrial waste material. According to one embodiment the emergency water is process water, drinking water, sea water, rain water, water from a lake, cleaned waste water, waste water, scrubbing water, condensed water from a condenser stage, or another type of water suitable for emergency cooling. According to one embodiment a liquid distributor includes a drip tube, a liquid channel distributor, a spray nozzle, or another device suitable for distributing a liquid in a gas.

According to one embodiment the gas/liquid contacting tower comprises a tower shell forming a side wall of the gas/liquid contacting tower, wherein the tower shell forms at least part of an outer tank sidewall of the emergency water tank. An advantage of this embodiment is that the emergency water tank is at least partly integrated with the gas/liquid contacting tower. This reduces investment and maintenance costs, and makes the gas/liquid contacting device very compact, both horizontally and vertically.

According to one embodiment the outer tank sidewall is at least partly formed from a vertical extension of the tower shell of the gas/liquid contacting tower. This embodiment provides for a particularly efficient manufacturing process. According to one embodiment, the vertical extension is formed by the tower shell extending vertically above at least a part of a top of the gas/liquid contacting tower.

According to one embodiment a top of the gas/liquid contacting tower forms at least a portion of a tank bottom of the emergency water tank. An advantage of this embodiment is that the emergency water tank is at least partly integrated with the gas/liquid contacting tower, making the gas/liquid contacting device compact, and reducing investment costs.

According to one embodiment a gas duct via which process gas may be transported out of or into the gas/liquid contacting tower forms at least a portion of an inner tank side wall and/or a tank bottom of the emergency water tank. An advantage of this embodiment is that the emergency water tank is at least partly integrated with the gas/liquid contacting tower, thereby reducing investment costs.

According to one embodiment insulation is arranged between at least a portion of the emergency water tank and an interior space of the gas/liquid contacting tower. An advantage of this embodiment is that it reduces the heating of the emergency water caused by the process gas. A lower temperature of the emergency cooling water reduces the evaporation of the emergency water from the emergency water tank, and increases the cooling effect of the emergency water.

According to one embodiment the emergency water tank is a separate tank which stands on the gas/liquid contacting tower. An advantage of this embodiment is that the emergency water tank can be given a size and shape which is at least partly independent from the size of the gas/liquid contacting tower.

According to one embodiment a gas duct via which process gas may be transported out of or into the gas/liquid contacting tower extends vertically through the emergency water tank. In this embodiment the emergency water tank will have the shape of a "collar" encircling the gas duct. This provides for a very compact and efficient design.

According to one embodiment an emergency water tank footprint area at least partly coincides with a gas/liquid contacting tower footprint area. This embodiment provides for an efficient use of ground space, since both the tower and the emergency water tank at least partly occupy the same horizontal space on the ground.

According to one embodiment an emergency water tank footprint area is contained within a gas/liquid contacting tower footprint area. This arrangement provides for a particularly compact design, in which the gas/liquid contacting tower with its emergency water tank can be located very close to other devices.

According to one embodiment the gas/liquid contacting tower is at least partly made from fibre reinforced plastic. An advantage of this embodiment is that fibre reinforced plastic is often efficient with regard to investment cost when it comes to manufacturing gas/liquid contacting devices. Furthermore, in case the emergency water tank is to be at least partly integrated into the gas/liquid contacting tower, such is often relatively easy to manufacture in fibre reinforced plastic material.

According to one embodiment the emergency water tank is arranged on a vertical level which is located above the vertical level of the emergency water distributor, such that emergency water may flow by gravity from the emergency water tank to the emergency water distributor. An advantage of this embodiment is that a passive system may be achieved, that does not require a pump powered by, for example, electricity to supply the emergency cooling water.

According to one embodiment, the gas/liquid contacting tower has an interior shape which is selected among: circular, square, rectangular, oval, triangular, hexagonal. According to one embodiment the gas/liquid contacting tower has a circular interior shape. An advantage of this embodiment is that forming circular towers is often efficient and creates a high mechanical strength. In particular towers made from fibre reinforced plastics are efficiently made with a circular interior space by winding plastic and fibre, such as glass-fibre, on a spool.

According to one embodiment, a gas duct via which process gas may be transported out of or into the gas/liquid contacting tower has an interior shape which is selected among: circular, square, rectangular, oval, triangular, hexagonal. According to one embodiment the gas duct has an interior shape which is selected among: circular, square and rectangular. An advantage of this embodiment is that circular, square and rectangular are often those shapes that are most cost efficient when the gas duct is to be connected to further gas ducts, other gas treatment devices, and/or other ancillary equipment.

According to one embodiment an emergency water distributor is arranged in an inlet gas duct arranged for transporting process gas to the gas/liquid contacting tower. Thereby, an emergency cooling of the process gas is achieved already prior to the gas entering the tower.

According to one embodiment an emergency water distributor is arranged in a gas inlet at which the process gas enters the gas/liquid contacting tower. Thereby, the process gas is subjected to emergency cooling upon entering the tower.

According to one embodiment the gas/liquid contacting tower comprises at least one wet scrubber stage for removing at least one gaseous pollutant from the process gas, and/or at least one condenser stage for condensing water vapor from the process gas.

According to one embodiment, the emergency water tank is provided with a lid covering at least a portion of the tank. An advantage of this embodiment is that the risk that unwanted objects fall into the emergency water tank is reduced.

A further object of the present invention is to achieve an efficient manner of manufacturing a gas/liquid contacting device for bringing a process gas into contact with a liquid.

This object may be achieved by means of a method of manufacturing a gas/liquid contacting device according to the features of claim 15.

An advantage of this method is that the cost of manufacturing the gas/liquid contacting device is reduced compared to prior art.

According to one embodiment the method further comprises forming a tower shell forming a side wall of the gas/liquid contacting tower, and extending the tower shell at least partly above a top of the gas/liquid contacting tower to form at least part of an outer tank sidewall of the emergency water tank. An advantage of this embodiment is that the emergency water tank is manufactured in conjunction with manufacturing the tower, and forms part of the same, which reduces the time and cost of manufacturing the complete gas/liquid contacting device. For example, a tower shell may be formed by winding layers of plastic and fibre web on a spool to form a tower shell of fibre reinforced plastic. Using such manufacturing technique, the tower shell can easily be made slightly higher, for example 1- 3 meters higher, than needed for just the tower itself, to form also the outer tank sidewall of the emergency water tank, which will thus become an integrated part of the gas/liquid contacting tower.

A still further object of the present invention is to achieve efficient emergency cooling of a gas/liquid contacting device.

This object is achieved by a method of emergency cooling a gas/liquid contacting device according to the features of claim 17.

An advantage of this method is that emergency water may be efficiently and quickly supplied to the process gas, without requiring expensive or space consuming equipment.

Further objects and features of the present invention will be apparent from the description and the claims.

### Brief description of the Drawings

The invention will now be described in more detail with reference to the appended drawings in which:
Fig. 1 is a schematic illustration of a gas/liquid contacting device, as seen in cross-section.
Fig. 2 is a schematic illustration of part of a gas/liquid contacting device according to a second embodiment.
Fig. 3 is a schematic illustration of part of a gas/liquid contacting device according to a third embodiment.
Fig. 4 is a schematic illustration of part of a gas/liquid contacting device according to a fourth embodiment.
Fig. 5 is a schematic illustration of part of a gas/liquid contacting device according to a fifth embodiment.

### Description of Preferred Embodiments

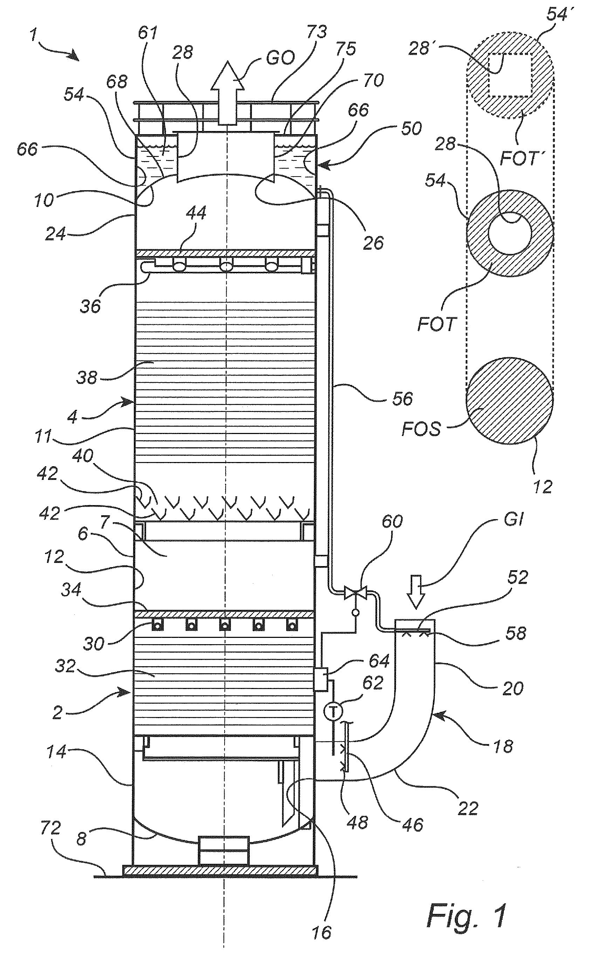

Fig. 1 is a schematic representation of a gas/liquid contacting device 1 arranged for bringing a process gas, such as a flue gas, into contact with a liquid, typically a liquid comprising water. The gas/liquid contacting device 1 comprises a wet scrubber stage 2 and a condenser stage 4. The wet scrubber stage 2 and the condenser stage 4 are arranged in a common gas/liquid contacting tower 6 comprising an interior space 7, a bottom 8 and a top 10. The condenser stage 4 is arranged vertically above the scrubber stage 2. The tower 6 comprises a tower shell 12, which may be made from, for example, fibre reinforced plastic, steel, cement, or another material suitable for being brought into contact with a process gas and with a liquid. The tower shell 12 forms a side wall 11 of the tower 6. The bottom 8 and top 10 may be made from a similar material as the tower shell 12.

At a lower end 14 of the tower 6 a gas inlet 16 is arranged. An inlet duct 18 is connected to the gas inlet 16. The inlet duct 18 has a first vertical portion 20, and a second bent portion 22 that connects the vertical portion 20 to the inlet 16. An arrow GI represents process gas, for example flue gas, entering first vertical portion 20 of the inlet duct 18.

At an upper end 24 of the tower 6 a gas outlet 26 is arranged. In the embodiment of Fig. 1 the gas outlet is 26 is formed in the top 10 of the tower 6. A vertical gas outlet duct 28 is connected to the gas outlet 26. An arrow GO represents process gas, for example flue gas, leaving the vertical outlet duct 28.

The wet scrubber stage 2 comprises a liquid distributor 30 which is arranged for distributing an absorption liquid in a process gas forwarded vertically upwards through the tower 6. A gas/liquid contact enhancing packing material 32 may be arranged in the wet scrubber stage 2 to enhance the contact between the process gas and the absorption liquid. The absorption liquid is collected at the bottom 8 of the tower 6 and may, by means of a pump (not shown) be at least partly recirculated to the liquid distributor 30. Above the liquid distributor 30 a mist eliminator 34 may be arranged to capture at least a portion of the absorption liquid that is entrained upwardly by the process gas. The wet scrubber stage 2 may, for example, be arranged for removing at least a portion of a content of, for example, HCl and/or SO₂ of the process gas passing through the scrubber stage 2.

An absorption liquid suitable for a wet scrubber stage may comprise water as its main component, optionally with an addition of a basic substance, such as sodium hydroxide, NaOH, sodium carbonate, Na₂CO₃, sodium bicarbonate, NaHCO₃, lime stone, CaCO₃, hydrated lime, Ca(OH)₂, or another suitable basic substance.

The condenser stage 4 comprises a liquid distributor 36 which is arranged for distributing a cooling liquid in the process gas forwarded vertically upwards through the tower 6. A gas/liquid contact enhancing packing material 38 may be arranged in the condenser stage 4 to enhance the contact between the process gas and the cooling liquid. A liquid collector 40 is arranged below the packing material 38 for collecting cooling liquid that has passed through the packing material 38. The liquid collector 40 comprises a number of channels 42 arranged in an alternating pattern in two separate levels, thereby allowing the process gas to pass upwardly through the liquid collector 40, while still collecting cooling liquid passing downwardly from packing material 38. The cooling liquid collected by the liquid collector 40 may, by means of a pump (not shown), be at least partly recirculated to the liquid distributor 36. Above the liquid distributor 36 a mist eliminator 44 may be arranged to capture at least a portion of the cooling liquid that is entrained upwardly by the process gas.

A cooling liquid suitable for a condenser stage typically has a lower temperature than the process gas entering the condenser stage. This causes a condensation of a portion of a content of water vapour of the process gas. The cooling liquid may, according to one embodiment, comprise water as its main component.

The process gas leaving the condenser stage 4 via the gas outlet 26 will have a lower content of water vapour than the process gas entering the condenser stage 4 from the wet scrubber stage 2.

The process gas entering the inlet duct 18 may often have a temperature of typically 120-240°C. An inlet liquid distributor 46 is arranged in the bent portion 22 of the inlet duct 18. The inlet liquid distributor 46 is provided with a number of spray nozzles 48 and is fluidly connected to a pump (not shown) supplying quenching liquid, typically comprising water, to the liquid distributor 46. The liquid supplied to the inlet liquid distributor 46 is atomized by the nozzles 48 and is mixed with the process gas to cause a cooling of the process gas prior to the same entering the tower 6. The mixing of the process gas with the atomized liquid supplied from the inlet liquid distributor 46 causes a cooling of the process gas to a temperature of, for example, 50 - 80°C. Often at least part of such cooling is the result of a portion of the liquid supplied to the process gas via the liquid distributor 46 being evaporated when coming into contact with the process gas. Upon leaving the condenser 4, the process gas may have a temperature of, for example, 30-60°C.

At least some of the components of the gas/liquid contacting device 1 may be made from temperature sensitive materials. Examples include the packings 32, 38, the liquid distributors 30, 36, the mist eliminators 34, 44, and the tower 6 itself, that may be made from, for example, polypropylene, teflon, fibre reinforced plastics, and other plastic materials. Hence, the inlet liquid distributor 46 provides for a cooling of the process gas to reduce the risk that any internal component of the gas/liquid contacting device 1 is damaged by excessively high temperatures.

The gas/liquid contacting device 1 is provided with an emergency cooling system 50. The emergency cooling system 50 is arranged to be activated in such situations when the normal cooling of the tower 6 is out of function, for example when the inlet liquid distributor 46 or the supply of quenching liquid thereto is out of function. The emergency cooling system 50 may comprise an emergency water distributor 52 for distributing emergency water in the process gas, an emergency water tank 54 arranged vertically above the gas/liquid contacting tower 6, and an emergency water supply pipe 56 which fluidly connects the emergency water tank 54 to the emergency water distributor 52.

The emergency water distributor 52 may be arranged in the first vertical portion 20 of the inlet duct 18 and is provided, for example, with at least one atomizing nozzle 58 which is arranged for atomizing emergency water in the process gas to cause cooling thereof. The emergency water supply pipe 56 is provided with an emergency water control valve 60 controlling the flow of emergency water 61 from the emergency water tank 54 to the emergency water distributor 52. The valve 60 may be a manually operated valve. Preferably the valve 60 is an automatic valve that opens automatically, when the normal cooling of the tower 6 is out of function. For example, a temperature sensor 62 could be arranged in the inlet duct 18 and/or in the tower 6 for sensing the temperature and for sending a corresponding signal to a control device 64. When the temperature measured by the temperature sensor 62 exceeds a set temperature, the control device 64 could cause opening of the valve 60 to cause a supply of emergency water to the emergency water distributor 52 and its nozzle 58 to obtain an emergency cooling of the process gas before the same enters the tower 6.

The emergency cooling system 50 is according to one example embodiment based on the principle of passive supply of emergency water. Hence, the emergency water tank 54 is arranged on a vertical level which is higher than that of the emergency water distributor 52, such that emergency water will flow automatically by gravity from the water tank 54 to the water distributor 52, via the pipe 56, when the valve 60 is opened.

In the embodiment of Fig. 1, the shell 12 extends vertically above at least a part of the top 10 of the tower 6. The emergency water tank 54 is supported by the gas/liquid contacting tower 6. Furthermore, the emergency water tank 54 is at least partly integrated with the gas/liquid contacting tower 6. The emergency water tank 54 has an outer tank sidewall 66 which is formed from the vertical extension of the shell 12 of the tower 6. The tank 54 has a tank bottom 68 which is formed as an upper side of the top 10 of the tower 6. The outlet duct 28 extends vertically through the centre of the emergency water tank 54. Hence, the emergency water tank 54 will have the shape of a "collar" encircling the gas duct 28. An inner tank side wall 70 is formed as an outer side of the vertical outlet duct 28. Hence, the emergency water tank 54 is formed on top of the tower 6 of the gas/liquid contacting device 1. Thereby, no separate stand is required for the emergency water tank 54, but the tower 6 is as such a stand that holds the emergency water tank 54 at a suitable height above the emergency water distributor 52.

In Fig. 1 the footprint area FOS of the shell 12, i.e., the horizontal area of the shell 12 projected on the ground 72, and the footprint area FOT of the emergency water tank 54, i.e., the horizontal area of the tank 54 projected on the ground 72, are schematically illustrated at the side of the tower 6. As illustrated, the footprint area FOT of the tank 54 is contained within the footprint area FOS of the shell 12 of the tower 6. Thereby, the total ground space required for the gas/liquid contacting device 1 is very limited.

In Fig. 1 the tower shell 12 and the outlet duct 28 both have circular interior shape. It will be appreciated that the shell 12 and outlet duct 28 may have other interior shapes than circular. For example, the shell 12 and/or the outlet duct 28 may have a square, rectangular, oval, triangular, or hexagonal shape. In Fig. 1 an alternative embodiment is illustrated in which a tank 54' is combined with a circular tower and a square outlet duct 28'. A footprint area FOT' of such tank 54' is contained within the footprint area FOS of the tower 12.

The emergency tank 54 may optionally be provided with railing 73 and a combined gangway and lid 75. This makes it possible to inspect and maintain the tank 54 and other equipment associated with the gas/liquid contacting device 1. Furthermore, the lid 75 reduces the risk that unwanted objects, such as litter, fall into the tank 54. The combined gangway and lid 75 could be made from, for example, steel plate, fibre reinforced plastic plate, perforated steel plate, expanded metal plate, and similar plate materials.

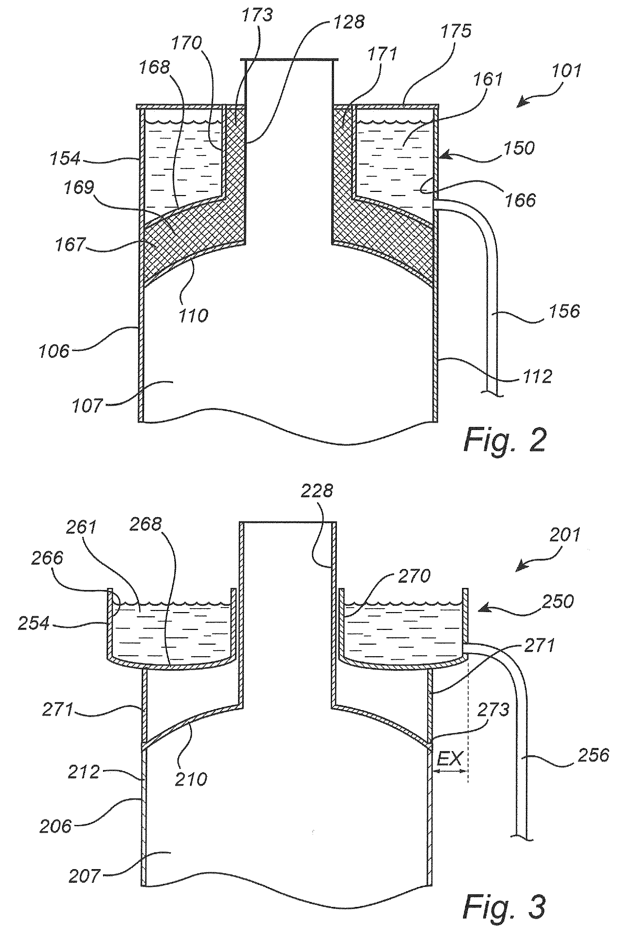

Fig. 2 is a schematic representation of a gas/liquid contacting device 101 according to an alternative embodiment. The gas/liquid contacting device 101 comprises an emergency cooling system 150 which is in many aspects similar to the emergency cooling system 50, but which has an emergency water tank 154 of a somewhat different design. The device 101 comprises a gas/liquid contacting tower 106 which has a tower shell 112 that extends vertically above the top 110 of the tower 106. The emergency water tank 154 has an outer tank sidewall 166 which is formed from a vertical extension of the shell 112. The tank 154 has a tank bottom 168 which is formed above the top 110 of the tower 106. A bottom space 167 is formed between the bottom 168 and the top 110. Optionally, this bottom space 167 may comprise an insulation 169. The tank 154 has an inner tank side wall 170. A side wall space 171 is formed between this inner tank side wall 170 and a vertical outlet duct 128. Optionally, this side wall space 171 may comprise an insulation 173. Hence, the top 110, the tank bottom 168 and the insulation 169 together form the bottom structure of the tank 154. Furthermore, the outlet duct 128, the inner tank side wall 170 and the insulation 173 together form an inner side wall structure of the tank 154. The arrangement of the bottom space 167 and the side wall space 171, optionally with an insulation 169, 173 in one or both of these spaces, reduces the heating of the emergency water 161 contained in the emergency water tank 154 by the process gas flowing upwards in interior space 107 of the tower 106 during normal operation of the gas/liquid contacting device 101. Thereby, the emergency water 161 will have a lower temperature when supplied for emergency cooling via pipe 156, in a manner similar to that described hereinbefore with reference to Fig. 1, which will result in enhanced cooling efficiency. Furthermore, the evaporation of the emergency cooling water 161 will be reduced, hence reducing the frequency of having to refill the tank 154 with make up water. Optionally, an emergency water tank lid 175 may be arranged on top of the tank 154. The emergency water tank lid 175 reduces the risk that any unwanted objects enter the tank 154, and also reduces the evaporation of water from the emergency water tank 154.

Fig. 3 is a schematic representation of a gas/liquid contacting device 201 according to a further alternative embodiment. The gas/liquid contacting device 201 comprises an emergency cooling system 250 which is in many aspects similar to the emergency cooling system 50, but which has an emergency water tank 254 of a somewhat different design. The device 201 comprises a gas/liquid contacting tower 206 which has a tower shell 212 that ends at a top 210 of the tower 206. The emergency water tank 254 is a tank that is separate from the shell 212. Hence, the top 210 and the outlet duct 228 are separate from the tank 254. The emergency water tank 254 has an outer tank sidewall 266, a tank bottom 268, and an inner tank side wall 270. The tank 254 is provided with support legs 271 that support the tank 254 on a top rim 273 of the shell 212. The fact that the tank 254 is a separate tank reduces the heating of the emergency water 261, which will result in enhanced cooling efficiency and reduced evaporation of the emergency cooling water 261. In the embodiment of Fig. 3, the outer tank sidewall 266 extends beyond the shell 212 a distance EX. Thereby, the footprint area of the tank 254 goes partly beyond the footprint area of the tower 206, which increases the volume of emergency water that can be stored in the tank 254. Still, the footprint area of the tank 254 at least partly coincides with the footprint area of the shell 212, thereby resulting in a relatively small required footprint area of the gas/liquid contacting device 201. Furthermore, the tank 254 is provided with support legs 271, but those support legs 271 are short, since the tank 254 stands on the top rim 273 of the shell 212 of the tower 206, and the tower 206 provides the height required for the emergency water 261 to flow, via pipe 256, to an emergency water distributor similar to that shown in Fig. 1. Since the tank 254 is located a short distance above the top 210, the emergency water 261 will be at least partly insulated from the process gas of interior space 207 of the tower 206. Thereby, the evaporation of the emergency water 261 will be rather limited. Optionally, the tank 254 may be provided with an emergency water tank lid similar to the lids 75, 175 described hereinbefore with reference to Figs. 1 and 2.

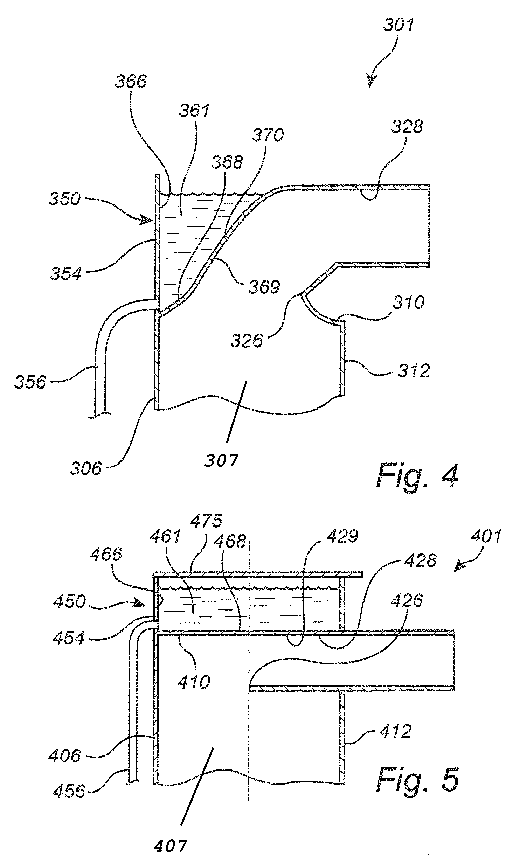

Fig. 4 is a schematic representation of a gas/liquid contacting device 301 according to a further alternative embodiment. The gas/liquid contacting device 301 comprises an emergency cooling system 350 which is in many aspects similar to the emergency cooling system 50, but which has an emergency water tank 354 of a somewhat different design. The device 301 comprises a gas/liquid contacting tower 306 which has a tower shell 312 that is connected to a top 310 of the tower 306. The tower 306 is provided with a horizontal outlet duct 328 which is connected to a gas outlet 326. The emergency water tank 354 is built on a similar vertical level as the outlet duct 328 and has an outer tank sidewall 366 which is formed from a vertical extension of the shell 312 of the tower 306. The tank 354 has a tank bottom 368 and an inner tank side wall 370 that are both formed from a side 369 of a part of the horizontal outlet duct 328. Emergency water 361 may flow, via pipe 356, to an emergency water distributor similar to that shown in Fig. 1.

Optionally, the tank 354 may be provided with an emergency water tank lid similar to the lids 75, 175 described hereinbefore with reference to Figs. 1 and 2.

Fig. 5 is a schematic representation of a gas/liquid contacting device 401 according to a further alternative embodiment. The gas/liquid contacting device 401 comprises an emergency cooling system 450 which is in many aspects similar to the emergency cooling system 50, but which has an emergency water tank 454 of a somewhat different design. The device 401 comprises a gas/liquid contacting tower 406 which has a tower shell 412 that is connected to a top 410 of the tower 406. The tower 406 is provided with a horizontal outlet duct 428 which is connected to a gas outlet 426. The top 410 of the tower 406 forms an upper portion 429 of part of the outlet duct 428.

The emergency water tank 454 is built on top of part of the outlet duct 428. The tank 454 has a tank bottom 468 which is formed as an upper side of the top 410 of the tower 406. The tank 454 has an outer tank sidewall 466 which is formed from a vertical extension of the shell 412 of the tower 406. Emergency water 461 may flow, via pipe 456, to an emergency water distributor similar to that shown in Fig. 1. Optionally, the tank 454 may be provided with an emergency water tank lid 475.

It will be appreciated that numerous variants of the embodiments described above are possible within the scope of the appended claims.

Hereinbefore it has been described that a gas/liquid contacting device 1 comprises a wet scrubber stage 2 and a condenser stage 4. It will be appreciated that other embodiments are also possible. The gas/liquid contacting device could comprise any combination of scrubber stages and condenser stages. For example, the gas/liquid contacting device could comprise 0 to 4 scrubber stages and 0 to 4 condensing stages, provided that the gas/liquid contacting device comprises at least a scrubber stage or at least a condensing stage.

Hereinbefore, it has been described that the process gas flows vertically upwards through the gas/liquid contacting tower 6. It will be appreciated that the process gas may also, as an alternative, flow vertically downwards through the gas/liquid contacting tower. In the latter case, the emergency water tank is arranged on top of the tower, hence adjacent to and/or around the gas inlet.

Hereinbefore it has been described that the bottom 8, the top 10 and the tower shell 12 are made from, for example, fiber reinforced plastic. It will be appreciated that the tower shell 12 may be made also from other materials. Examples of such materials include cement and steel. Regardless of from which material the bottom 8, top 10, and shell 12 are made, they may be provided with an interior coating. Such a coating may, for example, be made from rubber, epoxy-polymer, teflon, and other materials that are suitable for the corrosive environment inside the tower 6.

Hereinbefore it has been described that the emergency water distributor 52 is arranged in the inlet gas duct 18. It will be appreciated that an emergency water distributor may also, in combination with or as alternative to being arranged in the inlet gas duct 18, be arranged in the actual gas inlet 16, and/or in interior space 107 of the actual gas/liquid contacting tower 6.

Hereinbefore it has been described that the emergency water flows from the emergency water tank 54 to the emergency water distributor 52 by means of gravity in a passive system, requiring no pump. It will be appreciated that the emergency cooling system could, in accordance with an alternative embodiment, include a pump that pumps emergency water from an emergency tank to a water distributor. The latter could, for example, be advantageous when there is not sufficient height available between the emergency water tank and the emergency water distributor.

To summarize, a gas/liquid contacting device (1) for bringing a process gas into contact with a liquid comprises a gas/liquid contacting tower (6), and at least one liquid distributor (30, 36) arranged in an interior space (7, 107, 207, 307, 407) for distributing a liquid in the process gas inside the gas/liquid contacting tower (6). An emergency cooling system (50) comprises an emergency water distributor (52) for distributing emergency water in the process gas, and an emergency water tank (54) for supplying emergency water to the emergency water distributor (52). The emergency water tank (54) is arranged vertically above the gas/liquid contacting tower (6) and is formed on top of the gas/liquid contacting tower (6) outside the interior space (7, 107, 207, 307, 407).

## Claims

1. A gas/liquid contacting device for bringing a process gas into contact with a liquid comprises a gas/liquid contacting tower (6), at least one liquid distributor (30, 36) arranged in an interior space (7, 107, 207, 307, 407) of the gas/liquid contacting tower (6) for distributing a liquid in the process gas inside the gas/liquid contacting tower (6), and an emergency cooling system (50) comprising an emergency water distributor (52) for distributing emergency water in the process gas, an emergency water tank (54), and an emergency liquid supply pipe (56) which fluidly connects the emergency water tank (54) to the emergency water distributor (52),
**characterized in that** the emergency water tank (54) is arranged vertically above the top (10, 110, 210, 310, 410) of the gas/liquid contacting tower (6).

2. A gas/liquid contacting device according to claim 1, wherein the emergency water tank (54; 154; 254: 354; 454) is supported by the gas/liquid contacting tower (6; 106; 206; 306; 406).

3. A gas/liquid contacting device according to any one of the preceding claims, wherein the gas/liquid contacting tower (6; 106; 306; 406) comprises a tower shell (12; 112; 312; 412) forming a side wall (11) of the gas/liquid contacting tower (6; 106; 306; 406), wherein the tower shell (12; 112; 312; 412) forms at least part of an outer tank sidewall (66; 166; 366; 466) of the emergency water tank (54; 154; 354; 454).

4. A gas/liquid contacting device according to any one of the preceding claims, wherein a top (10; 110; 310; 410) of the gas/liquid contacting tower (6; 106; 306; 406) forms at least a portion of a tank bottom (68; 168; 368; 468) of the emergency water tank (54; 154; 354; 454).

5. A gas/liquid contacting device according to any one of the preceding claims, wherein a gas duct (28; 128; 328; 428) via which process gas may be transported out of or into the gas/liquid contacting tower (6; 106; 306; 406) forms at least a portion of an inner tank side wall (70; 170; 370) and/or a tank bottom (368; 468) of the emergency water tank (54; 154; 354; 454).

6. A gas/liquid contacting device according to any one of the preceding claims, wherein an insulation (169, 173) is arranged between at least a portion of the emergency water tank (154) and an interior space (107) of the gas/liquid contacting tower (106).

7. A gas/liquid contacting device according to claim 1 or 2, wherein the emergency water tank (254) is a separate tank which stands on the gas/liquid contacting tower (206).

8. A gas/liquid contacting device according to any one of the preceding claims, wherein a gas duct (28; 128; 228) via which process gas may be transported out of or into the gas/liquid contacting tower (6; 106; 206) extends vertically through the emergency water tank (54; 154; 254).

9. A gas/liquid contacting device according to any one of the preceding claims, wherein an emergency water tank footprint area (FOT; FOT') at least partly coincides with a gas/liquid contacting tower footprint area (FOS).

10. A gas/liquid contacting device according to any one of the preceding claims, wherein an emergency water tank footprint area (FOT, FOT') is contained within a gas/liquid contacting tower footprint area (FOS).

11. A gas/liquid contacting device according to any one of the preceding claims, wherein the gas/liquid contacting tower (6; 106; 206; 306; 406) is at least partly made from fibre reinforced plastic.

12. A gas/liquid contacting device according to any one of the preceding claims, wherein the emergency water tank (54; 154; 254; 354; 454) is arranged on a vertical level which is located above the vertical level of the emergency water distributor (52), such that emergency water (61; 161; 261; 361; 461) may flow by gravity from the emergency water tank (54; 154; 254; 354; 454) to the emergency water distributor (52), wherein the emergency water distributor (52) may be arranged in an inlet gas duct (18) arranged for transporting process gas to the gas/liquid contacting tower (6), and/or in a gas inlet (16) at which the process gas enters the gas/liquid contacting tower (6), and/or inside an interior space (7) of the gas/liquid contacting tower (6).

13. A gas/liquid contacting device according to any one of the preceding claims, wherein the gas/liquid contacting tower (6) comprises at least one wet scrubber stage (2) for removing at least one gaseous pollutant from the process gas, and/or at least one condenser stage (4) for condensing water vapor from the process gas.

14. A method of manufacturing a gas/liquid contacting device for bringing a process gas into contact with a liquid, the gas/liquid contacting device (1) comprising a gas/liquid contacting tower (6), at least one liquid distributor (30, 36) arranged in an interior space (7, 107, 207, 307, 407) of the gas/liquid contacting tower (6) for distributing a liquid in the process gas inside the gas/liquid contacting tower (6), and an emergency cooling system (50) comprising an emergency water distributor (52) for distributing emergency water in the process gas, and an emergency water tank (54) for supplying emergency water to the emergency water distributor (52), **characterized in** arranging the emergency water tank (54) vertically above the top (10, 110, 210, 310, 410) of the gas/liquid contacting tower (6).

15. A method according to claim 14, further comprising forming a tower shell (12; 112; 312; 412) forming a side wall (11) of the gas/liquid contacting tower (6; 106; 306; 406), and extending the tower shell (12; 112; 312; 412) at least partly above a top (10; 110; 310; 410) of the gas/liquid contacting tower (6; 106; 306; 406) to form at least part of an outer tank sidewall (66; 166; 366; 466) of the emergency water tank (54; 154; 354; 454).

16. A method of emergency cooling a gas/liquid contacting device in which a process gas is brought into contact with a liquid, the gas/liquid contacting device (1) comprising a gas/liquid contacting tower (6), and at least one liquid distributor (30, 36) arranged in an interior space (7, 107, 207, 307, 407) of the gas/liquid contacting tower (6) for distributing a liquid in the process gas inside the gas/liquid contacting tower (6), the method comprising supplying emergency water from an emergency water tank (54) arranged vertically above the top (10,110, 210, 310, 410) of the gas/liquid contacting tower (6) to an emergency water distributor (52) and distributing the emergency water in the process gas.

## Patentansprüche

1. Gas/Flüssigkeits-Kontaktvorrichtung zum Inkontaktbringen eines Prozessgases mit einer Flüssigkeit, umfassend einen Gas/Flüssigkeits-Kontaktturm (6), wenigstens einen Flüssigkeitsverteiler (30, 36), der in einem Innenraum (7, 107, 207, 307, 407) des Gas/Flüssigkeits-Kontaktturms (6) angeordnet ist, zum Verteilen einer Flüssigkeit in dem Prozessgas im Inneren des Gas/Flüssigkeits-Kontaktturms (6) und ein Notkühlsystem (50), umfassend einen Notwasserverteiler (52) zum Verteilen von Notwasser in dem Prozessgas, einen Notwassertank (54) und ein Notflüssigkeitszufuhrrohr (56), das den Notwassertank (54) mit dem Notwasserverteiler (52) fluidverbindet,
**dadurch gekennzeichnet, dass** der Notwassertank (54) senkrecht über der Oberseite (10, 110, 210, 310, 410) des Gas/Flüssigkeits-Kontaktturms (6) angeordnet ist.

2. Gas/Flüssigkeits-Kontaktvorrichtung gemäß Anspruch 1, wobei der Notwassertank (54; 154; 254; 354; 454) von dem Gas/Flüssigkeits-Kontaktturm (6; 106; 206; 306; 406) getragen wird.

3. Gas/Flüssigkeits-Kontaktvorrichtung gemäß einem der vorstehenden Ansprüche, wobei der Gas/Flüssigkeits-Kontaktturm (6; 106; 306; 406) eine Turmhülle (12; 112; 312; 412) umfasst, die eine Seitenwand (11) des Gas/Flüssigkeits-Kontaktturms (6; 106; 306; 406) bildet, wobei die Turmhülle (12; 112; 312; 412) wenigstens einen Teil einer äußeren Tank-Seitenwand (66; 166; 366; 466) des Notwassertanks (54; 154; 354; 454) bildet.

4. Gas/Flüssigkeits-Kontaktvorrichtung gemäß einem der vorstehenden Ansprüche, wobei eine Oberseite (10; 110; 310; 410) des Gas/Flüssigkeits-Kontaktturms (6; 106; 306; 406) wenigstens einen Teil eines Tankbodens (68; 168; 368; 468) des Notwassertanks (54; 154; 354; 454) bildet.

5. Gas/Flüssigkeits-Kontaktvorrichtung gemäß einem der vorstehenden Ansprüche, wobei eine Gasleitung (28; 128; 328; 428), durch die Prozessgas aus dem oder in den Gas/Flüssigkeits-Kontaktturm (6; 106; 306; 406) befördert werden kann, wenigstens einen Teil einer inneren Tank-Seitenwand (70; 170; 370) und/oder eines Tankbodens (368; 468) des Notwassertanks (54; 154; 354; 454) bildet.

6. Gas/Flüssigkeits-Kontaktvorrichtung gemäß einem der vorstehenden Ansprüche, wobei eine Isolation (169, 173) zwischen wenigstens einem Teil des Notwassertanks (154) und einem Innenraum (107) des Gas/Flüssigkeits-Kontaktturms (106) angeordnet ist.

7. Gas/Flüssigkeits-Kontaktvorrichtung gemäß Anspruch 1 oder 2, wobei der Notwassertank (254) ein getrennter Tank ist, der auf dem Notwassertank (206) steht.

8. Gas/Flüssigkeits-Kontaktvorrichtung gemäß einem der vorstehenden Ansprüche, wobei eine Gasleitung (28; 128; 228), durch die Prozessgas aus dem oder in den Gas/Flüssigkeits-Kontaktturm (6; 106; 206) befördert werden kann, senkrecht durch den Notwassertank (54; 154; 254) verläuft.

9. Gas/Flüssigkeits-Kontaktvorrichtung gemäß einem der vorstehenden Ansprüche, wobei die Notwassertank-Grundfläche (FOT; FOT') wenigstens teilweise mit der Gas/Flüssigkeits-Kontaktturm-Grundfläche (FOS) zusammenfällt.

10. Gas/Flüssigkeits-Kontaktvorrichtung gemäß einem der vorstehenden Ansprüche, wobei die Notwassertank-Grundfläche (FOT, FOT') in der Gas/Flüssigkeits-Kontaktturm-Grundfläche (FOS) enthalten ist.

11. Gas/Flüssigkeits-Kontaktvorrichtung gemäß einem der vorstehenden Ansprüche, wobei der Gas/Flüssigkeits-Kontaktturm (6; 106; 206; 306; 406) wenigstens teilweise aus faserverstärktem Kunststoff besteht.

12. Gas/Flüssigkeits-Kontaktvorrichtung gemäß einem der vorstehenden Ansprüche, wobei der Notwassertank (54; 154; 254, 354; 454) auf einer vertikalen Ebene angeordnet ist, die über der vertikalen Ebene des Notwasserverteilers (52) angeordnet ist, so dass Notwasser (61; 161; 261; 361; 461) durch Schwerkraft von dem Notwassertank (54; 154; 254, 354; 454) zu dem Notwasserverteiler (52) fließen kann, wobei der Notwasserverteiler (52) in einer Einlass-Gasleitung (18), die zum Befördern von Prozessgas zu dem Gas/Flüssigkeits-Kontaktturm (6) angeordnet ist, und/oder in einem Gaseinlass (16), bei dem das Prozessgas in den Gas/Flüssigkeits-Kontaktturm (6) eintritt, und/oder innerhalb eines Innenraums (7) des Gas/Flüssigkeits-Kontaktturms (6) angeordnet sein kann.

13. Gas/Flüssigkeits-Kontaktvorrichtung gemäß einem der vorstehenden Ansprüche, wobei der Gas/Flüssigkeits-Kontaktturm (6) wenigstens eine Nasswäscherstufe (2) zum Entfernen wenigstens eines gasförmigen Schadstoffs aus dem Prozessgas und/oder wenigstens eine Kondensatorstufe (4) zum Kondensieren von Wasserdampf aus dem Prozessgas umfasst.

14. Verfahren zum Herstellen einer Gas/Flüssigkeits-Kontaktvorrichtung zum Inkontaktbringen eines Prozessgases mit einer Flüssigkeit, wobei die Gas/Flüssigkeits-Kontaktvorrichtung (1) einen Gas/Flüssigkeits-Kontaktturm (6), wenigstens einen Flüssigkeitsverteiler (30, 36), der in einem Innenraum (7, 107, 207, 307, 407) des Gas/Flüssigkeits-Kontaktturms (6) angeordnet ist, zum Verteilen einer Flüssigkeit in dem Prozessgas im Inneren des Gas/Flüssigkeits-Kontaktturms (6), und ein Notkühlsystem (50), umfassend einen Notwasserverteiler (52) zum Verteilen von Notwasser in dem Prozessgas und einen Notwassertank (54) zum Versorgen des Notwasserverteilers (52) mit Notwasser, umfasst, **dadurch gekennzeichnet, dass** der Notwassertank (54) senkrecht über der Oberseite (10, 110, 210, 310, 410) des Gas/Flüssigkeits-Kontaktturms (6) angeordnet ist.

15. Verfahren gemäß Anspruch 14, ferner umfassend das Herstellen einer Turmhülle (12; 112; 312; 412), die eine Seitenwand (11) des Gas/Flüssigkeits-Kontaktturms (6; 106; 306; 406) bildet, und Verlängern der Turmhülle (12; 112; 312; 412) wenigstens teilweise über die Oberseite (10; 110; 310; 410) des Gas/Flüssigkeits-Kontaktturms (6; 106; 306; 406), um wenigstens einen Teil einer äußeren Tank-Seitenwand (66; 166; 366; 466) des Notwassertanks (54; 154; 354; 454) zu bilden.

16. Verfahren zum Notkühlen einer Gas/Flüssigkeits-Kontaktvorrichtung, in der ein Prozessgas mit einer Flüssigkeit in Kontakt gebracht wird, wobei die Gas/Flüssigkeits-Kontaktvorrichtung (1) einen Gas/Flüssigkeits-Kontaktturm (6) und wenigstens einen Flüssigkeitsverteiler (30, 36), der in einem Innenraum (7, 107, 207, 307, 407) des Gas/Flüssigkeits-Kontaktturms (6) angeordnet ist, zum Verteilen einer Flüssigkeit in dem Prozessgas im Inneren des Gas/Flüssigkeits-Kontaktturms (6) umfasst, wobei das Verfahren das Zuführen von Notwasser aus einem Notwassertank (54), der senkrecht über der Oberseite (10, 110, 210, 310, 410) des Gas/Flüssigkeits-Kontaktturms (6) angeordnet ist, zu einem Notwasserverteiler (52) und Verteilen des Notwassers in dem Prozessgas umfasst.

## Revendications

1. Dispositif de contact gaz/liquide pour mettre un gaz de procédé en contact avec un liquide qui comprend une tour de contact gaz/liquide (6), au moins un distributeur de liquide (30, 36) disposé dans un espace intérieur (7, 107, 207, 307, 407) de la tour de contact gaz/liquide (6) pour distribuer un liquide dans le gaz de procédé à l'intérieur de la tour de contact gaz/liquide (6), et un système de refroidissement de secours (50) comprenant un distributeur d'eau de secours (52) pour distribuer de l'eau de secours dans le gaz de procédé, un réservoir d'eau de secours (54), et un tuyau d'alimentation en liquide de secours (56) qui relie de façon fluidique le réservoir d'eau de secours (54) au distributeur d'eau de secours (52), **caractérisé en ce que** le réservoir d'eau de secours (54) est disposé verticalement au-dessus du sommet (10, 110, 210, 310, 410) de la tour de contact gaz/liquide (6).

2. Dispositif de contact gaz/liquide selon la revendication 1, dans lequel le réservoir d'eau de secours (54 ; 154 ; 254 ; 354 ; 454) est soutenu par la tour de contact gaz/liquide (6 ; 106 ; 206 ; 306 ; 406).

3. Dispositif de contact gaz/liquide selon l'une quelconque des revendications précédentes, dans lequel la tour de contact gaz/liquide (6 ; 106 ; 306 ; 406) comprend une enveloppe de tour (12 ; 112 ; 312 ; 412) formant une paroi latérale (11) de la tour de contact gaz/liquide (6 ; 106 ; 306 ; 406), l'enveloppe de tour (12 ; 112 ; 312 ; 412) formant au moins une partie d'une paroi latérale extérieure de réservoir (66 ; 166 ; 366 ; 466) du réservoir d'eau de secours (54 ; 154 ; 354 ; 454).

4. Dispositif de contact gaz/liquide selon l'une quelconque des revendications précédentes, dans lequel un sommet (10 ; 110 ; 310 ; 410) de la tour de contact gaz/liquide (6 ; 106 ; 306 ; 406) forme au moins une partie d'un fond de réservoir (68 ; 168 ; 368 ; 468) du réservoir d'eau de secours (54 ; 154 ; 354 ; 454).

5. Dispositif de contact gaz/liquide selon l'une quelconque des revendications précédentes, dans lequel une conduite de gaz (28 ; 128 ; 328 ; 428) par laquelle le gaz de procédé peut être transporté à l'extérieur ou à l'intérieur de la tour de contact gaz/liquide (6 ; 106 ; 306 ; 406) forme au moins une partie d'une paroi latérale intérieure de réservoir (70 ; 170 ; 370) et/ou d'un fond de réservoir (368 ; 468) du réservoir d'eau de secours (54 ; 154 ; 354 ; 454).

6. Dispositif de contact gaz/liquide selon l'une quelconque des revendications précédentes, dans lequel une isolation (169, 173) est disposée entre au moins une partie du réservoir d'eau de secours (154) et un espace intérieur (107) de la tour de contact gaz/liquide (106).

7. Dispositif de contact gaz/liquide selon la revendication 1 ou 2, dans lequel le réservoir d'eau de secours (254) est un réservoir séparé qui se trouve sur la tour de contact gaz/liquide (206).

8. Dispositif de contact gaz/liquide selon l'une quelconque des revendications précédentes, dans lequel une conduite de gaz (28 ; 128 ; 228) par laquelle le gaz de procédé peut être transporté à l'extérieur ou à l'intérieur de la tour de contact gaz/liquide (6 ; 106 ; 206) s'étend verticalement à travers le réservoir d'eau de secours (54 ; 154 ; 254).

9. Dispositif de contact gaz/liquide selon l'une quelconque des revendications précédentes, dans lequel une empreinte au sol de réservoir d'eau de secours (FOT ; FOT') coïncide au moins partiellement avec une empreinte au sol de tour de contact gaz/liquide (FOS).

10. Dispositif de contact gaz/liquide selon l'une quelconque des revendications précédentes, dans lequel une empreinte au sol de réservoir d'eau de secours (FOT ; FOT') est contenue dans une empreinte au sol de tour de contact gaz/liquide (FOS).

11. Dispositif de contact gaz/liquide selon l'une quelconque des revendications précédentes, dans lequel la tour de contact gaz/liquide (6 ; 106 ; 206 ; 306 ; 406) est au moins partiellement constituée de plastique renforcé de fibres.

12. Dispositif de contact gaz/liquide selon l'une quelconque des revendications précédentes, dans lequel le réservoir d'eau de secours (54 ; 154 ; 254 ; 354 ; 454) est disposé à un niveau vertical qui est situé au-dessus du niveau vertical du distributeur d'eau de secours (52), de telle sorte que l'eau de secours (61 ; 161 ; 261 ; 361 ; 461) peut s'écouler par gravité du réservoir d'eau de secours (54 ; 154 ; 254 ; 354 ; 454) au distributeur d'eau de secours (52), le distributeur d'eau de secours (52) pouvant être disposé dans une conduite de gaz d'entrée (18) agencée pour transporter le gaz de procédé jusqu'à la tour de contact gaz/liquide (6), et/ou dans une entrée de gaz (16) au niveau de laquelle le gaz de procédé pénètre dans la tour de contact gaz/liquide (6), et/ou dans un espace intérieur (7) de la tour de contact gaz/liquide (6).

13. Dispositif de contact gaz/liquide selon l'une quelconque des revendications précédentes, dans lequel la tour de contact gaz/liquide (6) comprend au moins un étage de laveur (2) pour retirer au moins un polluant gazeux du gaz de procédé, et/ou au moins un étage de condenseur (4) pour condenser la vapeur d'eau issue du gaz de procédé.

14. Procédé de fabrication d'un dispositif de contact gaz/liquide pour mettre un gaz de procédé en contact avec un liquide, le dispositif de contact gaz/liquide (1) comprenant une tour de contact gaz/liquide (6), au moins un distributeur de liquide (30, 36) disposé dans un espace intérieur (7, 107, 207, 307, 407) de la tour de contact gaz/liquide (6) pour distribuer un liquide dans le gaz de procédé à l'intérieur de la tour de contact gaz/liquide (6), et un système de refroidissement de secours (50) comprenant un distributeur d'eau de secours (52) pour distribuer de l'eau de secours dans le gaz de procédé, et un réservoir d'eau de secours (54) pour fournir de l'eau de secours au distributeur d'eau de secours (52), **caractérisé par** l'agencement du réservoir d'eau de secours (54) verticalement au-dessus du sommet (10, 110, 210, 310, 410) de la tour de contact gaz/liquide (6).

15. Procédé selon la revendication 14, comprenant en outre la formation d'une enveloppe de tour (12 ; 112 ; 312 ; 412) formant une paroi latérale (11) de la tour de contact gaz/liquide (6 ; 106 ; 306 ; 406), et l'extension de l'enveloppe de tour (12 ; 112 ; 312 ; 412) au moins partiellement au-dessus d'un sommet (10 ; 110 ; 310 ; 410) de la tour de contact gaz/liquide (6 ; 106 ; 306 ; 406) pour former au moins une partie d'une paroi latérale extérieure de réservoir (66 ; 166 ; 366 ; 466) du réservoir d'eau de secours (54 ; 154 ; 354 ; 454).

16. Procédé de refroidissement de secours d'un dispositif de contact gaz/liquide dans lequel un gaz de procédé est mis en contact avec un liquide, le dispositif de contact gaz/liquide (1) comprenant une tour de contact gaz/liquide (6), et au moins un distributeur de liquide (30, 36) disposé dans un espace intérieur (7, 107, 207, 307, 407) de la tour de contact gaz/liquide (6) pour distribuer un liquide dans le gaz de procédé à l'intérieur de la tour de contact gaz/liquide (6), le procédé comprenant la fourniture d'eau de secours provenant d'un réservoir d'eau de secours (54) agencé verticalement au-dessus du sommet (10, 110, 210, 310, 410) de la tour de contact gaz/liquide (6) à un distributeur d'eau de secours (52) et la distribution de l'eau de secours dans le gaz de procédé.
